# EUROPEAN PATENT APPLICATION

(11) **EP 4 582 987 A1**
(43) Date of publication of application: **09.07.2025**
(21) Application number: 24382011.5
(22) Date of filing: 08.01.2024
(51) Int. Cl.: G06F 21/62, H04L 9/40, H04W 12/06, H04L 9/32, G06F 21/57, H04W 12/10, G06F 21/77

(54) **UPDATE AGENT DOWNLOAD AND AUTHENTICATION SCHEME**

(71) Applicant: Giesecke+Devrient Mobile Security Germany GmbH, 81677 München (DE)
(72) Inventor: Gifre, Clara, 81677 München (DE); Patiño, David, 81677 München (DE); Ruau, Federico, 81677 München (DE); Muntaner, Joan Francesc, 81677 München (DE); Perez, Francisco Javier, 81677 München (DE)
(74) Representative: LKGLOBAL Lorenz & Kopf Patentanwalt Attorney at Law PartG mbB

(57) **Abstract**

The present invention relates to securely uploading a software image onto a secure element. An unprotected image package is generated from a software image, a manifest and a manifest signature. The unprotected image package consists of a sequence of tag length values, TLVs. A protected image package is generated based on an encryption key and the TLVs of the unprotected image package. A bound image package is then generated based on a plurality of data segmented from the protected image package and a first Rabin signature, and transmitted together with the first Rabin signature to the secure element.

## Description

The present invention relates to securely downloading a piece of software, such as an operating system, on a secure element, and more particularly, to implementing an authentication scheme for providing a software update to a secure element.

### BACKGROUND OF THE INVENTION

Recently, mobile devices configured to employ electronic subscriber profiles for communicating on mobile networks have emerged. Such mobile devices are typically equipped with smart cards containing electronic/embedded Secure Elements (SE), such as electronic/embedded universal integrated circuit cards (eUICCs), smartSD, or smart microSD, to name a few.

A secure element, SE, is a tamper resistant element, TRE, that provides a secure memory and execution environment within a smart card/device in which application code and application data can be securely stored and administered. The secure element ensures that access to the data stored on the card is provided only when authorized.

A secure element designed to be used in telecommunication products, such as mobile devices, is configured to store one or more electronic subscriber profiles, in particular electronic subscriber identification module (eSIM) profiles, that may allow mobile devices to connect to one or more mobile networks. A subscriber profile (e.g., eSIM profile) may be generated by a mobile network operator (MNO) and may be downloaded to a mobile network device. The subscriber profile may then be installed on the secure element of the mobile device and used for communication over a corresponding mobile network by the mobile device.

Historically, a secure element's software does not vary once it has surpassed the production phase. This means that if any problem is found that is related to the software within it (new attacks or vulnerabilities, new updates on sector specification, the expected life cycle of the devices using it), the only possible action is to change the whole secure element. This makes it particularly difficult to keep up to date with the market needs in terms of production (with software updates after production being impossible), especially when the production is bound to be executed within a certified environment in the factory.

The GSMA remote provisioning architecture (c.f., SGP.22 RSP Technical Specification, Version 2.0, issued by the GSM Association - in the following referred to as GSMA RSP 22) provides a platform for implementing a procedure to load software onto a secure element (SE) or Tamper Resistant Element (TRE). The GSMA platform allows to implement a change in the profiles stored in the secure element by providing to the secure element a Bound Profile Package containing profile updates.

To ensure integrity of the Bound Profile Package, the GSMA remote provisioning architecture implements an authentication and encryption scheme based on the SCP03t algorithm. The scheme requires several exchanges between the TRE and the server before it can prepare a Bound Profile Package that contain the profiles used for the load, which might not be optimal for a broadcast deploy of a new piece of software.

Furthermore, the GSMA platform does not allow for implementing a change in the basic software present in the SE/TRE, such as for instance a change of an operating system, as the security scheme provided lacks extra layers of protection which might be required for the deployment of critical data such as a new operating system.

Recently, remote provisioning capabilities for supporting operating system updates onto secure elements during field deployment have been put forward. Such solutions require however a large footprint on the side of the secure element for implementing the update process, which makes them difficult to be adopted within small chips architectures. The large footprint may be reduced by simplifying the authentication process on the side of the secure element, in particular, by implementing a symmetric keys based authentication. Such solutions, although requiring a smaller footprint, come however at a price of reduced security protection.

It is therefore desirable to provide a solution for secure software remote provisioning, which is efficient in terms of performance and memory consumption, while at the same time provides for a high level of security for the deployment of critical data.

### SUMMARY OF THE INVENTION

The present invention addresses the above object by the subject-matter covered by the independent claims. Preferred embodiments of the invention are defined in the dependent claims.

According to a first aspect of the present invention, there is provided a method performed at an off-card entity for securely uploading a software image onto a secure element. In a step, an unprotected image package is generated from the to be uploaded software image, a manifest and a manifest signature, wherein the unprotected image package consists of a sequence of tag length values, TLVs. In a following step, a protected image package is generated based on an encryption key and the TLVs of the unprotected image package. A bound image package is then generated based on a plurality of data segmented from the protected image package and a first Rabin signature, and transmitted together with the first Rabin signature to the secure element.

The expression "software image" refers to a generic data format encapsulating a software version and possibly cryptographic data to be used by an update agent within a secure element. A software image can be an image of an operating system, but also an image of an applet or other application to be installed onto the secure element. Additional information on the software image to be uploaded, in particular information for authenticating the software image and/or authenticating an issuer of the image, are stored within the manifest. The manifest is protected by the manifest signature.

The proposed method provides thus an efficient and secure solution for authenticating the provider of software updates by the receiving secure element. Employing a Rabin signature for protecting the bound software package ensures a high level of security protection, while keeping the hardware requirements at the receiving secure element small. This allows the update agent at the secure element to occupy less footprint, such that the proposed method can be efficiently used with secure elements with restricted memory capacity. Sensitive applications within the secure element, such as an operating system, can be updated in an efficient and secure manner.

In some embodiments of the present invention, the method further comprises the steps of signing the software image with a second signature and inserting the second signature in the manifest. The second signature is a Rabin signature.

Using a Rabin signature inside the manifest for protecting the entire payload of the installation package provides for stronger authentication and increase the assurance for the integrity of the received payload. Upon receiving the bound image package, the secure element may extract the second signature form the manifest and verify it using a corresponding second key stored at the secure element, to verify the integrity of the software image. The asymmetric Rabin signature increase further the security protection for the software image to be uploaded.

In some embodiments of the present invention, the manifest is combined with the software image and the manifest is signed with the manifest signature. The manifest may contain another signature for the software image part of the combined package consisting of the manifest and the software image. The manifest signature is attached to the signed sequence and the obtained data sequence is split into a plurality of TLVs. Preferably, the manifest signature is generated based on a Rabin scheme.

Using an asymmetric key-based signature scheme, such as a Rabin signature, provides a high level of protection and ensures integrity of the transmitted data. The manifest signature is used for authentication purposes, notably for verifying the authenticity of the software image at the secure element.

In some embodiments of the present invention, generating a protected image package comprises encrypting the image package using an Advanced Encryption Standard, AES, based scheme. The Advanced Encryption Standard, AES, scheme may be implemented by SCP03t based on AES or AES GCM (Galois/Counter Mode).

In some embodiments of the present invention, generating a bound image package comprises generating a package binding function to link the software image to the secure element, the package binding function comprising an initialize secure channel function for opening a communication session with the secure element; and signing the initialize secure channel function with the first Rabin signature.

Signing the initialize secure channel function with the first Rabin signature provides an efficient and secure way for authenticating the communication session between the off-card device and the secure element. The secure element respectively its update agent upon receiving the bound software package is able to verify the first signature using a corresponding first key stored at the secure element, and thus to authenticate the communication session.

In some embodiments of the present invention, the bound software package comprises a protected keys field carrying image protection keys, for encrypting the software image.

Preferably, the first Rabin signature is carried in the protected keys field. This provides a simple and secure way to transmit the Rabin signature used at the off-card device to the secure element. However, the first Rabin signature may also be carried in the Initialize Secure Channel field.

In other words, several signatures are used for different functions or purposes. A bound package signature (which is optional) protects the initialize secure channel and the protected keys and is typically sent before these; another signature is included in the initialize secure channel or the protected keys; another signature is used for signing the manifest; another signature is used for signing the software image, which is stored inside the manifest.

Protected keys add the possibility to use predetermined keys for the software image/manifest protection, while these are protected by the encryption set derived with the initialize secure channel.

This is useful for example since it allows for protection of the software image to happen separately from the bound package generation, and, as a consequence, it is possible to keep the complete software image/manifest part of the process the same and only change the bound package authentication part (bound package signature, initialize secure channel, protected keys). Happening separately here can mean having different entities taking care of each part, for example a first entity providing the software image and the manifest, and a second entity providing the authentication and header part, with the protected keys being the nexus between the two.

In some embodiments of the present invention, generating a bound image package further comprises generating a third signature as a package binding signature to protect the initialize secure channel function and the image protection keys, and inserting the third signature into a header of the installation package carrying the package binding function.

This adds a further level of protection to the authentication and encryption scheme.

Preferably, the third signature is a cipher-based Message Authentication Code, MAC, generated using a MAC algorithm based on a symmetric key block cipher. Alternatively, the third signature is a Rabin-based asymmetric signature.

According to a second aspect of the present invention, there is provided a method for securely uploading a software image onto a secure element. For example, the secure element may be an embedded integrated circuit card, eUICC. The method is performed at an update agent of the secure element and comprises the steps of: obtaining from an off-card device a bound image package, comprising a plurality of segments, segmented from an un-protected image package comprising the software image, a manifest and a manifest signature, the bound image package being signed with a first Rabin signature; authenticating the off-card device by verifying the first signature using a first public key stored at the secure element; verifying the integrity of the software image; and uploading the software image within a memory of the secure element, if the off-card device is authenticated and the integrity of the software image verified.

In some embodiments according to the first or second aspects of the present invention, the manifest comprises a second Rabin signature used for signing the software image, wherein the step of verifying the integrity of the software image comprises checking the second Rabin signature using a second public key stored at the secure element.

In some embodiments, according to the second aspect, the update agent is performing prior to verifying the integrity of the software image, an authentication of the manifest by verifying the manifest signature.

According to a third aspect of the present invention, there is provided an update agent for use in a secure element to securely upload a software image onto the secure element. The update agent is configured to obtain from an off-card device a bound image package, comprising a plurality of segments, segmented from an unprotected image package comprising the software image, a manifest and a manifest signature, the bound image package being signed with a first Rabin signature; to authenticate the off-card device by verifying the first signature using a first public key stored at the secure element; to authenticate the software image and/or verify the integrity of the software image; and to upload the software image within a memory of the secure element, if the off-card device is authenticated and the integrity of the software image is verified.

Preferably, the update agent is configured to authenticate the software image by verifying the manifest signature.

Preferably, the manifest comprises a second Rabin signature used for signing the software image, the update agent being configured to verify the integrity of the software image by checking the second Rabin signature using a second public key stored at the secure element.

It has to be noted that all the devices, elements, units and means described in the present application could be implemented in software or hardware elements or combination thereof. All steps which are performed by the various entities described in the present application as well as the described functionalities are intended to mean that the respective entity is adapted to or configured to perform the respective steps and functionalities.

Further aspects, features and advantages of the present invention will become apparent to those of ordinary skills in the art upon reviewing the following detailed description of preferred embodiments and variants of the present invention in conjunction with the accompanying figures.

### BRIEF DESCRIPTION OF THE DRAWINGS

Reference will now be made to the accompanying figures, in which:
- FIG. 1: shows a simplified representation of a remote eSIM/eUICC provisioning system;
- FIG. 2: shows a security scheme for performing software/OS update on the eSIM/eUICC provisioning system of Fig. 1;
- FIG. 3: shows a flow chart of a method for securely uploading a software image performed at an off-card device according to an embodiment;
- FIGs. 4 and 5: show implementations of the steps of the method of Fig. 3 according to preferred embodiments; and
- FIG. 6: shows a flow chart of a method for securely uploading a software image performed at a secure element according to an embodiment.

### DETAILED DESCRIPTION

Detailed explanations of the present invention are given below with reference to attached drawings that illustrate specific embodiment examples of the present invention. These embodiments are described in sufficient detail to enable those skilled in the art to practice the invention. It is to be understood that the various embodiments of the present invention, although different, are not necessarily mutually exclusive. For example, a particular feature, structure, or characteristic described herein in connection with one embodiment may be implemented within other embodiments without departing from the scope of the present invention. In addition, it is to be understood that the position or arrangement of individual elements within each disclosed embodiment may be modified without departing from the scope of the present invention. The following detailed description is, therefore, not to be taken in a limiting sense, and the scope of the present invention is defined only by the appended claims, appropriately interpreted, along with the full range of equivalents to which the claims are entitled. In the drawings, like numerals refer to the same or similar functionality throughout the several views.

Through this specification, the term Tamper Resistant Element, TRE, refers to a secure element, for instance an eSIM or eUICC.

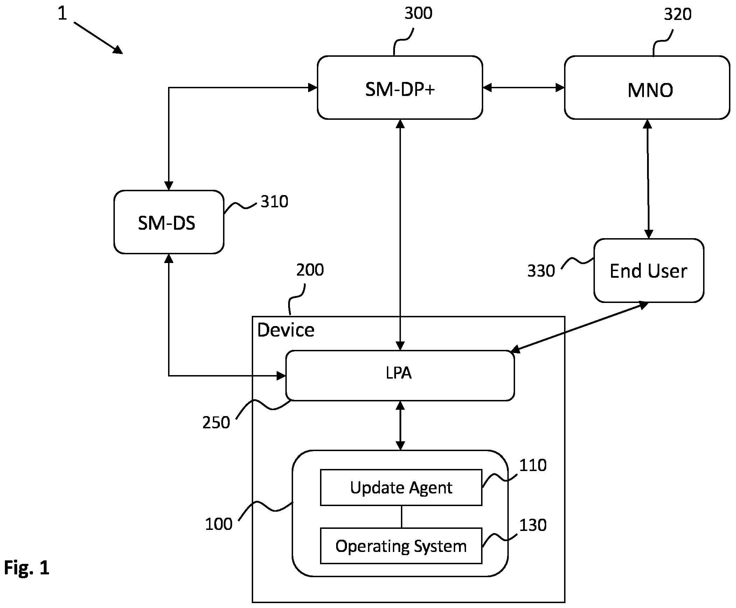

Fig. 1 shows an exemplary architecture of a SM-DP+ based system 1. The architecture is an adaptation of the GSMA architecture described in SGP.22 RSP Technical Specification, Version 2.0, issued by the GSM Association (in the following referred to as GSMA RSP 22). The eSIM provisioning system 1 is organized around several elements: the SM-DP+ (Subscription Manager - Data Preparation and Secure Routing, 300), the SM-DS (Subscription Manager - Discovery Server, 310), the LPA (Local Profile Assistance, 250) and the eUICC or secure element, 100, the latter being part of a mobile device 200, of an end user 330.

The SM-DP+ 300 is responsible for the creation, download, remote management (enable, disable, update, delete) and the protection of subscriber profiles provided by the MNO 320. In particular, the SM-DP+ 300 may be configured to provide a profile in a Bound Profile Package or Bound Installation Package, and enable the Bound Profile/Installation Package to be securely transmitted. The SM-DP+ 300 is also referred to as an off-card device.

The LPA (Local Profile Assistant, 250) is a set of functions in the device 200 responsible for providing the capability to download (encrypted) profiles to the eUICC/TRE/SE 100. It also presents the local management end user interface to the end user 330 so they can manage the status of profiles on the eUICC/TRE/SE 100.

The SM-DS 310 provides means for the SM-DP+ 300 to communicate with the eUICC/TRE/SE 100.

The external device 200 may describe an entity which is in control and communicates with the eUICC 100. It can be a mobile terminal, or whatever device it is that the eUICC is mounted on.

The update agent 110 is the entity within the secure element/eUICC 100 (separated from the OS 130) in charge of receiving an installation package (or software package) and performing the software update. The update agent is loaded onto the secure element or TRE preferably together with an (initial) Operating System (OS, 130 in Fig. 1), during the factory production of the eUICC 100. Alternatively, only the update agent is loaded onto the TRE during factory production, while the OS is loaded at a later time after factory production.

The update agent 110 may contain at least one memory structure or region, to store sensible data thereon, such as cryptographic keys used by the update agent to authenticate and verify integrity of the received installation package.

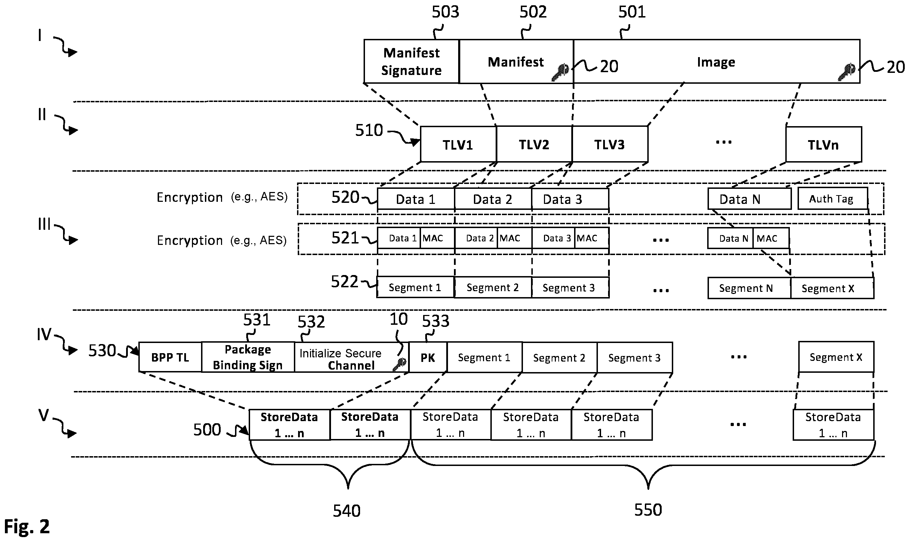

Fig. 2 shows a software update security scheme. Using this software update security scheme, a software image (e.g., operating system, OS, image) may be securely provided to the TRE 100 of Fig. 1 through a bound image package 500.

The diagram in Fig. 2 illustrates the various formats an image or profile package will take from its generation to being download onto the TRE/secure element. In particular, the profile package is created in several stages I to V beginning with the software image by performing several operations such as prepending, segmentation and encryption.

In the first stage I, the software image 501, provided by an image issuer, is prepended with a manifest 502 and a manifest signature 501. The manifest 502 contains information pertaining to the new software image to be uploaded and ensures the image is acceptable and the issuer is trusted. The manifest signature 503 protects the entire manifest package 502. The resulted block contains clear data that is not encrypted yet. The image 501 is signed with a signature 20.

In stage II, the SM-DP+ 300 may generate, from the image generated in stage I, an unprotected image package containing a sequence of profile element TLVs (Tag Length Values) TLV1, ..., TLVn, 510. Preferably, the structure of the TLVs are in accordance with the SIMalliance eUICC Profile Package: In-teroperable Format Technical Specification V2.0.

In stage III, the SM-DP+ 300 may generate from the unprotected image package, a protected image package, by applying TLV encryption and MACing. These operations may preferably follow the scheme described in GSMA "Remote Provisioning of Embedded UICC Technical specification" V3.1. Preferably, TLV encryption is done by applying a private profile protection key PK-ENC, generated by the SM-DP+ 300. The resulting encrypted data block is split into segments 1 to X, 522.

Generating a protected image package may comprise encrypting the un-protected image package 510 using an AES based scheme, like SCP03t or AES GCM, to obtain an AES-encrypted package 521.

In stage IV the SM-DP+ 300 may generate a bound package (or installation package) 500, by linking or binding the protected image package obtained in stage III to a particular TRE. This is done via a key agreement between the TRE and the SM-DP+/off-card device. Through this application the expression installation package may refer to a package which binds or links the image to be installed to a particular TRE.

Finally, in stage V the installation package 500, with header part 540 and data-carrying part 550, is segmented into blocks, and delivered to the update agent 110 on the TRE (secure element) 100. Preferably, the segments are sent via STORE DATA commands. Other APDU commands may be used as well.

Various authentication schemes can be used on the security scheme depicted in Fig. 2. One solution uses elliptic curves to perform authentication processes on the OS Update through the update agent. This scheme is highly secure, however requires a lot of footprint due to the requirements for the cryptographic implementation in a TRE. Another solution is to use AES MACs to perform authentication processes on the OS Update through the update agent. This scheme offers quite better footprint compared to the first option, but relies on symmetric keys, which means that it is less secure.

Embodiments of the present invention propose a further authentication scheme based on Rabin signatures, to achieve high security while at the same time reducing the footprint. The scheme is based on modifying specific stages of the security scheme of Fig. 2 to accommodate Rabin-based signatures.

The Rabin asymmetric key scheme is a variant of the RSA scheme with public-key exponent 2. The encryption of a message m, as performed at the off-card device, is C = m² mod N, where N=pq is a product of two prime numbers. N is the public key while (p, q) is the secrete key. Decryption is performed at the eUICC, respectively update agent, by solving the equation x² = C mod N.

The Rabin scheme may also be used by the off-card device to create a signature for the message m by solving the equation x² = m mod N. Any of the four roots S can be used to form a signed message (m, S). The update agent verifies the signature by comparing S² with m mod N. The verifier accepts the signature as valid when the two numbers are equal.

Embodiments of the present invention may include various modifications of the scheme of Fig. 2, in particular:
- Changes within the signatures for the manifest, Image and the Initialize Secure channel based on Rabin algorithm, while the encryption schemes are AES based. That is, the solution changes the authentication methods proposed for the Rabin signature, which implies at least the same footprint and performance offered by symmetric keys based solutions while increasing the security implications (as no symmetric keys are involved anymore).
- Changes within the signatures for the manifest, Image and the Initialize Secure Channel and the inclusion of a new key derivation based on Rabin algorithm; however, other key derivation schemes may be used or implemented. These changes extend the scheme of Fig. 2 by adding to the protected keys field a new keyset generated based on Rabin signatures but taking as a reference the CASD (Controlling Authority Security Domain) schemes for RSA keys.

According to an embodiment, a modification of the scheme of Fig. 2 is within stage IV during the generation of the installation package 500, notably, in using a first Rabin signature 10 for signing the initialize secure channel function 532 of the package binding function, needed for opening a secure communication session with the secure element.

According to a further embodiment, in addition or alternatively to the previous embodiment, a modification of the scheme of Fig. 2 is in the use of a second Rabin signature 20 for signing the image 501 during stage I. The Rabin signature 20 may be generated at the off-card device using a secrete key of the off-card device. The Rabin signature 20 may be inserted into the manifest 502, in phase I. Inserting the Rabin signature 20 into the manifest will allow the TRE upon receiving the software package to verify the image signature. In addition, a Rabin signature may be used as the manifest signature 503 to protect the entire manifest package 502. Preferably, the Rabin signature 20 used for protecting the image 501 is used also as manifest signature. To further increase security, a different Rabin signature may be used.

According to yet a further embodiment, in addition or as an alternative to the previously described two embodiments, the scheme of Fig. 2 is modified by including new key derivation based on the Rabin algorithm during stages IV and V. In particular, a third Rabin signature is generated in stage IV as a package binding signature 531 to protect the initialize secure channel function and the pair of image protection keys 533. The third signature 531 is then inserted into a header 540 of the installation package 500 during stage V.

The modifications described above are not to be understood as being performed in a fixed order, as they can be taken independently of each other as well as in any arbitrary combination thereof.

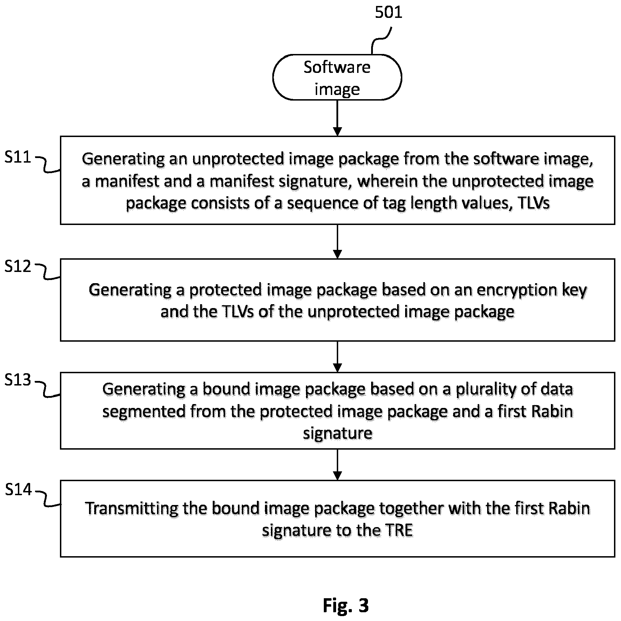

The installation package 500 obtained by the end of stage V, with the overall structure depicted in Fig 2 may be generated by the method depicted in Fig. 3, according to a preferred embodiment. The method may be implemented by an off-card entity, such as the SM-DP+ server 300 or the LPA 250 of the device 200 from Fig. 1.

With reference to Fig. 3, in a first step, S11, an unprotected image package 510 is generated at the off-card device. The unprotected image package is generated from the software image 501, the manifest 502 and the manifest signature 503, wherein the unprotected image package consists of a sequence of tag length values, TLVs.

In a step S12 a protected image package 520 is generated based on an encryption key and the TLVs of the unprotected image package 510.

In step S13 a bound image package is generated based on a plurality of data segmented from the protected image package 520 and a first Rabin signature 10.

The generated bound image package together with the first Rabin signature 10 are transmitted in step S14 to the TRE.

It is noted that steps S11 to S13 correspond to the various scheme modifications within stages I to V of the scheme of Fig. 2, as described above. In particular, step S11 may implement the process executed in stages I and II. Step S12 may implement the process executed in stage III. Step S13 may implement the process executed in stage IV. Step S14 may implement the process executed in stage V.

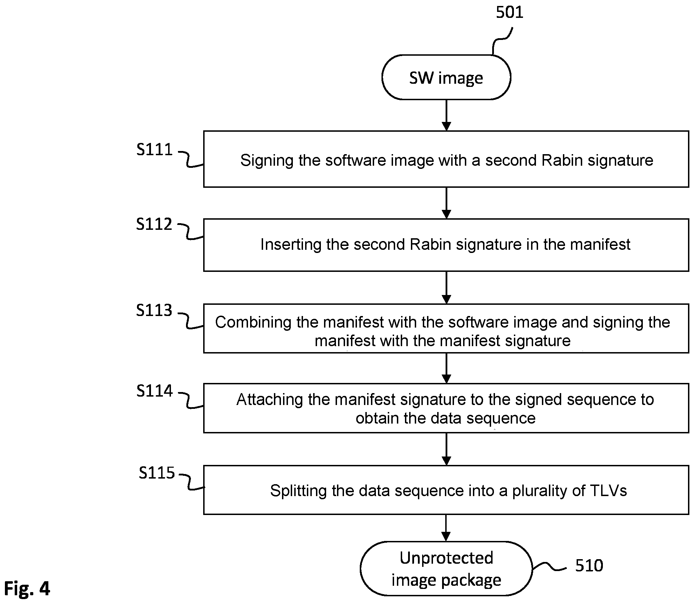

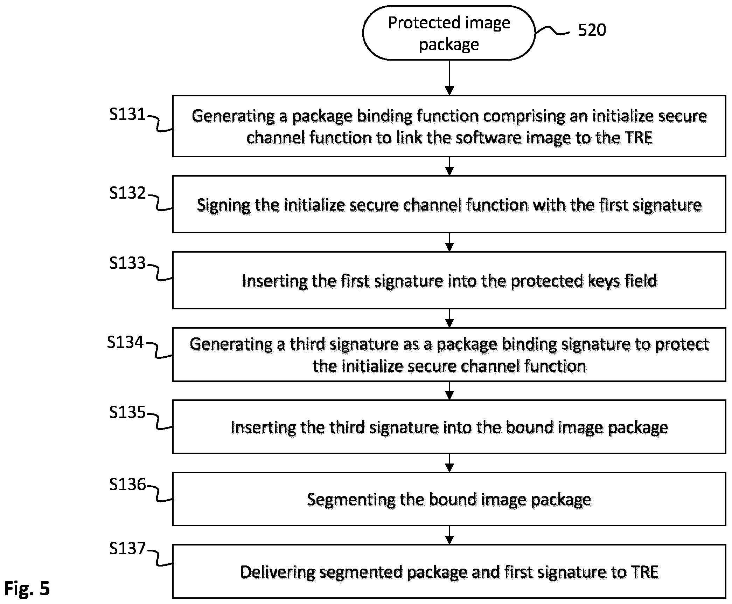

Preferred implementations of steps S11 and S13 of Fig. 3, will be described in the following with reference to Figures 4 and 5.

Fig. 4 shows an implementation of step S11 of generating an unprotected image package, according to a preferred embodiment. The step of generating S11 an unprotected image package comprises signing S111 the software image with a second signature, in particular a second Rabin signature 20. As with the first Rabin signature 10, the second Rabin signature 20 may be generated by the off-card device based on a secrete key known only by the off-card device. The secrete keys at the off-card device for generating the first and second signatures, may be different. The second signature is inserted S112 in the manifest 502. Alternatively, the second signature may be identical to the first signature 10. However, using different first and second Rabin signatures increases the level of security protection.

In step S113 the manifest is combined with the software image, wherein the manifest is signed with the manifest signature. As the manifest signature 503, the second Rabin signature 20 may be used. Alternatively, a different Rabin signature may be used to increase further the security of the package comprising the software image. In step S114 the manifest signature is attached to the signed sequence, and the obtained data sequence is split in step S115 into the plurality of TLVs within the unprotected image package 510.

Step S12 in Fig. 3 of generating a protected image package may be implemented either by encrypting the image package 510 using an Advanced Encryption Standard, AES, based scheme like SCP03t or AES-GCM, for example.

Fig. 5 shows an implementation of step S13 in Fig. 3 according to a preferred embodiment of the present invention. The step S13 of generating a bound image package 500 from the plurality of data segmented from the protected image package 520 uses the first Rabin signature 10, and comprises generating S131 a package binding function to link the software image to the TRE, the package binding function comprising an initializes secure channel function 532 for opening a communication session with the TRE, and signing S132 the initialize secure channel function with the first Rabin signature 10.

In a preferred embodiment, the first Rabin signature 10 may be inserted S133 into the protected keys field 533 of the bound software package (c.f., Fig. 2). This field is used for carrying image protection keys, for encrypting the software image. Alternatively, the first signature may be sent to the TRE separately from the bound image package. However, the first Rabin signature 10 may also be carried in the Initialize Secure Channel field. Sending the first signature 10 within the bound image package increase however the level of safety, due to the further protection mechanisms the bound image package is subjected to.

Optionally, a third signature may be generated in step S134 as a package binding signature 531 to protect the initialize secure channel function and the pair of image protection keys. This third signature may be inserted in step S135 into a header 540 of the installation package 500 carrying the package binding function. The package binding signature protects both, the initialize secure channel and protected keys, because the entity signing initialize secure channel and the one signing the initialize secure channel and the protected keys package can (and would in general) be different, and each signature certifies the content and origin of the piece it signs. Preferably, the third signature is a Rabin signature.

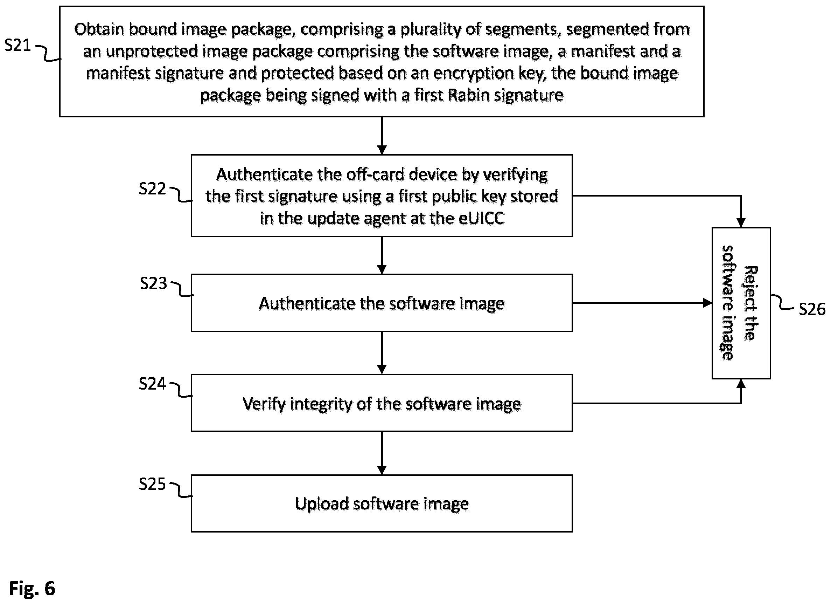

In a further aspect of the present invention, there is provided an update agent 110 for use in a TRE or secure element 100 to install a software update on the TRE 100. The update agent may be the update agent 110 depicted in Fig. 1. The update agent is configured to implement a security scheme such as the security scheme depicted in Fig. 2, though the method depicted in Fig. 6.

With reference to Fig. 6, the update agent 110 receives in step S21 the bound image package 500 from the off-card device. The bound image package comprises a plurality of segments, segmented from an unprotected image package 510 comprising the software image 501, a manifest 502 and a manifest signature 503. The plurality of segments is protected with an encryption key, and the bound image package is signed with a first signature 10, which is a Rabin-based signature.

In step S22 the update agent 110, performs a step of authenticating the off-card device, respectively the communication session established between the off-card device and the TRE. This involves verifying the first Rabin signature 10 using a first public key stored at the TRE.

Optionally, in addition to authenticating the sender of the software image, the update agent 110 may authenticate in step S23 the software image by verifying the manifest signature 503.

Integrity of the software image may be verified in step S24, again, by using the Rabin signature scheme. In particular, the update agent verifies the integrity of the software image by verifying a second Rabin signature 20, extracted from the manifest 501, against a second public key stored at the TRE.

In case of the off-card device being authenticated and the integrity of the software image being verified, the update agent uploads/installs in step S25 the software image within a memory of the TRE 100. Otherwise, that is, the authentication or the integrity verification failed, the software image is rejected in step S26.

The scheme in Fig. 2 and corresponding method steps in Figs. 3 to 6 use several cryptographic keys and signatures for implementing authentication and encryption through the various stages, which have been particularly designated for saving footprint at the update agent to allow the scheme to be efficiently implemented within small chip designs, while at the same time to provide a high-level of security protection to allow uploading high-sensitive data onto the TRE.

In particular, the off-card device providing the bound image package is assumed to dispose of the following keys pairs:
- A first (private key, public key) pair to generate the first Rabin signature;
- A second (private key, public key) pair to generate the second Rabin signature;
- AES-based encryption keys (optional).

The update agent 110 is personalized with a plurality of cryptographic keys, selected from a set comprising at least:
- A first key, for verifying the first Rabin signature of the bound image package received from the off-card device. The first key corresponds to the first public key of the off-card device.
- A second key, for verifying the second Rabin signature to establish integrity of the software image. The second key corresponds to the second public key of the off-card device.

The aspects and embodiments described herein provide an efficient and secure solution for securely uploading a software image onto a secure element, which can be realized with a small footprint at the hardware-restricted secure element.

The possibility to update the software in the secure element with this scheme would prove useful to update the OS in a secure element to keep up to date with the evolution of the market, as well as to provide patches and security and bug fixes at any point in the life cycle of the product. The proposed scheme and its implementation allow for the update agent component to occupy less footprint, allowing it to target secure elements/TREs with less available memory. By using the asymmetric keys Rabin signature scheme, better security is achieved at a reasonable footprint. Thus, a solution for secure software remote provisioning with improved security protection is achieved, which is efficient in terms of performance and memory consumption and which can be implemented with a small hardware footprint.

In the foregoing specification, the invention has been described with reference to specific embodiments thereof. It will, however, be evident that various modifications and changes may be made thereto without departing from the broader scope of the invention. For example, the above-described process flows are described with reference to a particular ordering of process actions. However, the ordering of many of the described process actions may be changed without affecting the scope or operation of the invention. The specification and drawings are, accordingly, to be regarded in an illustrative rather than restrictive sense.

## Claims

1. A method for securely uploading a software image (501) onto a secure element (100) performed at an off-card device and comprising the steps of:
- generating (S11) an unprotected image package (510) from a software image (501), a manifest (502) and a manifest signature (503), wherein the unprotected image package (510) consists of a sequence of tag length values, TLVs;
- generating (S12) a protected image package based on an encryption key and the TLVs of the unprotected image package;
- generating (S13) a bound image package based on a plurality of data segmented from the protected image package and a first Rabin signature (10); and
- transmitting (S14) the bound image package together with the first Rabin signature (10) to the secure element.

2. The method according to claim 1, wherein generating (S1) an unprotected image package comprises:
- signing (S111) the software image (501) with a second signature (20); and
- inserting (S112) the second signature in the manifest (502);
- wherein the second signature (20) is a Rabin signature.

3. The method according to claim 2, further comprising:
- combining (S113) the manifest with the software image and signing the manifest with the manifest signature (503), ;
- attaching (S114) the manifest signature (503) to the signed sequence to obtain the data sequence; and
- splitting (S115) the data sequence into a plurality of TLVs.

4. The method according to any one of claims 1 to 3, wherein the manifest signature (503) is generated based on a Rabin scheme.

5. The method according to any one of claims 1 to, 4 wherein generating (S12) a protected image package comprises encrypting the image package (510) using an Advanced Encryption Standard, AES, based scheme.

6. The method according to any one of claims 1 to 5, wherein generating (S13) a bound image package comprises:
- generating (S131) a package binding function to link the software image to the secure element, the package binding function comprising an initialize secure channel function (532) for opening a communication session with the secure element; and
- signing (S132) the initialize secure channel function (532) with the first Rabin signature (10).

7. The method according to any one of claims 1 to 6, wherein the bound software package comprises a protected keys field (533) carrying image protection keys, for encrypting the software image.

8. The method according to claim 7, wherein the first Rabin signature (10) is inserted (S133) in the protected keys field (533) or in the initialize secure channel function (532).

9. The method according to claim 7 or 8, wherein generating (S13) a bound image package further comprises generating (S134) a third signature as a package binding signature (531) to protect the initialize secure channel function and the image protection keys, and inserting (S135) the third signature (531) into a header (540) of the installation package (500) carrying the package binding function.

10. The method according to claim 9, wherein the third signature (531) is a cipher-based Message Authentication Code, MAC, generated using a MAC algorithm based on a symmetric key block cipher, or the third signature (531) is generated based on an asymmetric Rabin scheme.

11. A method for securely uploading a software image (501) onto a secure element (100) performed at an update agent (110) of the secure element (100) and comprising the steps of:
- obtaining (S21) from an off-card device a bound image package (500), comprising a plurality of segments, segmented from an unprotected image package comprising the software image (501), a manifest (502) and a manifest signature (503), the bound image package (500) being signed with a first Rabin signature (10);
- authenticating (S22) the off-card device by verifying the first Rabin signature (10) using a first public key stored at the secure element (100);
- verifying (S24) the integrity of the software image (501); and
- uploading (S25) the software image (501) within a memory of the secure element (100), if the off-card device is authenticated and the integrity of the software image (501) verified.

12. The method according to claim 11, wherein the manifest (502) comprises a second Rabin signature (20) used for signing the software image (501), wherein the step of verifying the integrity of the software image (501) comprises checking the second Rabin signature (20) using a second public key stored at the secure element (100).

13. The method according to claim 11 or 12, further comprising prior to verifying the integrity of the software image (501) authenticating (S23) the manifest (502) by verifying the manifest signature (503).

14. An update agent (110) for use in a secure element (100) to securely upload a software image (501) onto the secure element (100), the update agent (110) being configured to:
- obtain from an off-card device a bound image package (500), comprising a plurality of segments, segmented from an unprotected image package comprising the software image (501), a manifest (502) and a manifest signature (503), the bound image package (500) being signed with a first Rabin signature (10);
- authenticate the off-card device by verifying the first signature (10) using a first public key stored at the secure element (100);
- verify the integrity of the software image (501); and
- upload the software image (501) within a memory of the secure element (100), if the off-card device is authenticated and the integrity of the software image (100) is verified.

15. The update agent (110) according to claim 14, wherein the manifest (502) comprises a second Rabin signature (20) used for signing the software image (501), the update agent (110) being configured to verify the integrity of the software image (501) by checking the second Rabin signature (20) using a second public key stored at the secure element (100).
